# EUROPÄISCHE PATENTANMELDUNG

(11) **EP 3 175 905 A1**
(43) Veröffentlichungstag der Anmeldung: **07.06.2017**
(21) Anmeldenummer: 15198068.7
(22) Anmeldetag: 04.12.2015
(51) Int. Cl.: B01D 53/04, B01D 53/26

(54) **LUFTTROCKNUNGSKARTUSCHE, LUFTTROCKNER UND NUTZFAHRZEUG MIT EINER LUFTTROCKNUNGSKARTUSCHE**

(71) Anmelder: Haldex Brake Products Aktiebolag, 261 24 Landskrona (SE)
(72) Erfinder: Heer, Siegfried, 69168 Wiesloch (DE)
(74) Vertreter: REHBERG HÜPPE + PARTNER

(57) **Zusammenfassung**

Die Erfindung betrifft eine Lufttrocknungskartusche (5) für eine Druckluftanlage eines Nutzfahrzeugs.

Erfindungsgemäß verfügt die Lufttrocknungskartusche (5) über einen Sockelelement-Ankopplungsbereich (6), über welchen die Lufttrocknungskartusche (5) mit einem Sockelelement (4) eines Lufttrockners (1) koppelbar ist. Darüber hinaus weist der Sockelelement-Ankopplungsbereich (6) der Lufttrocknungskartusche (5) einen Steuereingang (93) für ein Steuersignal für ein Entlastungsventil (40) auf. Des Weiteren ist an der Lufttrocknungskartusche (5) ein Entlastungsventil-Ankopplungsbereich (94) vorhanden, an welchen das Entlastungsventil (40) ankoppelbar ist oder angekoppelt ist.

Erfindungsgemäß sind der Sockelelement-Ankopplungsbereich (6) einerseits und der Entlastungsventil-Ankopplungsbereich (94) auf gegenüberliegenden Seiten der Lufttrocknungskartusche (5) angeordnet. Vorzugsweise kann die erfindungsgemäße Lufttrocknungskartusche (5) von unten an ein Sockelelement (4) montiert werden. Das Steuersignal für die Ansteuerung des Entlastungsventils (40) kann dabei mittels einer Steuerleitung (44) durch das Innere der Lufttrocknungskartusche (5), insbesondere durch ein Trocknungsmittel (14), hindurchgeführt werden.

## Beschreibung

### TECHNISCHES GEBIET DER ERFINDUNG

Die vorliegende Erfindung betrifft eine Lufttrocknungskartusche, welche Einsatz findet in einer Druckluftanlage eines Nutzfahrzeugs zwecks Aufbereitung von Druckluft, insbesondere durch Beseitigung von Feuchtigkeit, anderen Fluiden wie feine Öltröpfchen eines Kompressors und/oder Verunreinigungen, bspw. in Form von mit der Druckluft mitgeführten Partikeln und Fremdkörpern. Des Weiteren betrifft die Erfindung einen Lufttrockner, in dem eine Lufttrocknungskartusche vorhanden ist. Schließlich betrifft die Erfindung ein Nutzfahrzeug, welches mit einer Lufttrocknungskartusche oder einem Lufttrockner ausgestattet.

### STAND DER TECHNIK

Herkömmliche Lufttrocknungskartuschen sind auf einem Sockelelement, welches mit einem Fahrzeugrahmen eines Nutzfahrzeugs verbunden sind, montiert. In der Lufttrocknungskartusche wird die Druckluft durch Filter, labyrinthartige Abscheider, Zyklone und mindestens ein Trocknungsmittel wie insbesondere Silikagel geführt, um aus der Druckluft Feuchtigkeit, Fluide oder Verunreinigungen zu beseitigen. Die Zufuhr und die Ableitung der Druckluft kann über einen Eingang sowie einen Ausgang des Sockelelements erfolgen. Bei dichter Verbindung der Lufttrocknungskartusche mit dem Sockelelement durchströmt dann die Druckluft von dem Eingang des Sockelelements durch die Lufttrocknungskartusche über den Ausgang des Sockelelements zu weiteren Komponenten der Druckluftanlage und Verbrauchern derselben.

In der Lufttrocknungskartusche sind geeignete Aufnahmeräume für abgesonderte Feuchtigkeit, Fluide und Verunreinigungen vorzusehen. Je nach Befüllung der Aufnahmeräume und Kontaminationsgrad der Filter und/oder des Trocknungsmittels und Regenerationsfähigkeit eines Trocknungsmittels ist ein regelmäßiger oder unregelmäßiger Austausch der Lufttrocknungskartusche erforderlich. Ein Austauschintervall der Lufttrocknungskartusche kann unter Umständen erhöht werden, wenn im Bereich des Sockelelements oder dem Verbindungsbereich zwischen Lufttrocknungskartusche und Sockelelement ein Aufnahmeraum für Feuchtigkeit, ein Fluid oder Verunreinigungen vorhanden ist und dem Aufnahmeraum ein Entlastungsventil zugeordnet ist. Wird das Entlastungsventil in eine Öffnungsstellung gesteuert, verbindet dieses den Aufnahmeraum mit der Umgebung, womit Druckluft aus der Druckluftanlage durch den Aufnahmeraum unter Mitnahme der Feuchtigkeit, des Fluids oder Verunreinigungen in die Umgebung gelangt.

### AUFGABE DER ERFINDUNG

Der Erfindung liegt die Aufgabe zugrunde, eine Lufttrocknungskartusche vorzuschlagen, welche hinsichtlich
- der konstruktiven Gestaltungsmöglichkeiten und der Möglichkeiten der Ausrichtung und Anordnung der Lufttrocknungskartusche, des Sockelelements und/oder des Entlastungsventils,
- der Steuerungsmöglichkeiten des Entlastungsventils,
- der Integration der Lufttrocknungskartusche und des Lufttrockners in ein Nutzfahrzeug,
- der Montage und Demontage oder des Austausches einer Lufttrocknungskartusche

verbessert ist. Des Weiteren liegt der Erfindung die Aufgabe zugrunde, einen entsprechend verbesserten Lufttrockner vorzuschlagen. Eine weitere Aufgabe der Erfindung betrifft die Verbesserung eines Nutzfahrzeugs mit einer Lufttrocknungskartusche oder einem Lufttrockner.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine Lufttrocknungskartusche für eine Druckluftanlage eines Nutzfahrzeugs. Erfindungsgemäß verfügt die Lufttrocknungskartusche über einen Sockelelement-Ankopplungsbereich. Über den Sockelelement-Ankopplungsbereich kann die Lufttrocknungskartusche mit einem Sockelelement eines Lufttrockners gekoppelt werden. Diese Kopplung kann der Abstützung der Lufttrocknungskartusche an dem Sockelelement dienen und/oder der Herstellung von pneumatischen und/oder elektrischen Verbindungen. Möglich ist, dass zwischen Sockelelement und Lufttrocknungskartusche im Bereich der Sockelelement-Ankopplungselemente auch Dichtelemente wie Dichtringe verspannt sind und/oder weitere Elemente wie Filter, Gehäuseteile oder anderweitige Bauteile gefangen oder verspannt sind. Vorzugsweise handelt es sich bei dem Sockelelement-Ankopplungsbereich um die dem Sockelelement zugewandte Stirnseite der Lufttrocknungskartusche, welche vorzugsweise nicht eben ausgebildet ist und mit mehreren unterschiedlichen Komponenten der Lufttrocknungskartusche gebildet sein kann.

Im Rahmen der Erfindung weist der Sockelelement-Ankopplungsbereich u. U. einen Eingang und/oder einen Ausgang für die Lufttrocknungskartusche durchströmende Druckluft auf. In jedem Fall weist die Lufttrocknungskartusche im Sockelelement-Ankopplungsbereich aber einen Steuereingang auf für die Übertragung eines Steuersignals zur Steuerung eines Entlastungsventils, über welches eine gesteuerte Ableitung von Flüssigkeiten, Fluiden oder Verunreinigungen erfolgt. Vorzugsweise befinden sich in dem Sockelelement-Ankopplungsbereich der Eingang, der Ausgang und der Steuereingang.

Des Weiteren verfügt im Rahmen der Erfindung die Lufttrocknungskartusche über ein Entlastungsventil-Ankopplungsbereich, an welchem das Entlastungsventil ankoppelbar ist oder angekoppelt ist.

Erfindungsgemäß sind der Sockelelement-Ankopplungsbereich und der Entlastungsventil-Ankopplungsbereich auf gegenüberliegenden Seiten der Lufttrocknungskartusche angeordnet. Hiermit werden die Gestaltungsmöglichkeiten erweitert gegenüber dem Stand der Technik, für welchen der Sockelelement-Ankopplungsbereich und der Entlastungsventil-Ankopplungsbereich üblicherweise auf derselben Seite der Lufttrocknungskartusche angeordnet sind. Erfindungsgemäß ist es insbesondere nicht mehr erforderlich, dass zwingend das Entlastungsventil im Bereich des Sockelelements oder auf der dem Sockelelement zugewandten Seite der Lufttrocknungskartusche angeordnet ist. Vielmehr kann dieses auf die andere Seite der Lufttrocknungskartusche verlagert werden, womit die Bauraumanforderungen im Sockelelement-Ankopplungsbereich und im Verbindungsbereich zwischen Sockelelement und Trocknungskartusche vereinfacht werden können, da hier nicht mehr das Entlastungsventil anzuordnen ist.

Findet die erläuterte Lufttrocknungskartusche in "klassischem Einbau" mit Montage auf einem Sockelelement Einsatz, bedeutet dies, dass das Entlastungsventil auf der Oberseite der Lufttrocknungskartusche angeordnet ist. Das "Ausblasen" der Feuchtigkeit, Fluide oder Verunreinigungen kann dann ebenfalls nach oben erfolgen oder es folgt von dem Entlastungsventil die Ableitung der Feuchtigkeit, Fluide oder Verunreinigungen wieder nach unten. Möglich ist aber auch, dass die Lufttrocknungskartusche "liegend" angeordnet ist, so dass sich diese von einem Sockelelement mit ihrer Längsachse in horizontaler Richtung, bspw. in Fahrzeuglängsrichtung oder in Fahrzeugquerrichtung, erstreckt. Möglich ist aber auch, dass sich die Lufttrocknungskartusche von dem Sockelelement in einer neuen, umgekehrten Bauweise nach unten erstreckt. In diesem Fall kann das Entlastungsventil unterhalb des Sockelelements (und unterhalb der Filter und des Trocknungsmittels der Lufttrocknungskartusche) angeordnet sein, womit unter Umständen auch die Zufuhr der Feuchtigkeit, Fluide oder Verunreinigungen durch die Schwerkraft nach unten zu dem Entlastungsventil ermöglicht wird. Das Öffnen des Entlastungsventils kann unmittelbar zu der Ableitung der Feuchtigkeit, Fluide oder Verunreinigungen nach unten in die Umgebung führen.

Vorzugsweise ist zwischen dem Sockelelement-Ankopplungsbereich einerseits und dem Entlastungsventil-Ankopplungsbereich andererseits das mindestens eine Trocknungsmittel und/oder mindestens ein Filter angeordnet.

Für die Steuerung des Entlastungsventils (worunter auch eine Regelung zu verstehen ist) ist die Zuführung eines Steuersignals zu dem Entlastungsventil erforderlich. Hierbei kann das Entlastungsventil oder die Lufttrocknungskartusche abseits des Sockelelements oder im Entlastungsventil-Ankopplungsbereich über einen Anschluss verfügen, über welchen dann das Steuersignal zugeführt wird. Handelt es sich um ein an anderer Stelle elektromagnetisch gesteuertes pneumatisches Steuersignal, kann dieses der Lufttrocknungskartusche oder dem Entlastungsventil oder dem Entlastungsventil-Ankopplungsbereich über eine unter Umständen flexible externe Leitung wie eine Kunststoffleitung zugeführt werden. Eine Demontage der Lufttrocknungskartusche von dem Sockelelement für einen Austausch gegen eine neue Lufttrocknungskartusche erfordert dann aber, dass zusätzlich zu der Demontage der Lufttrocknungskartusche von dem Sockelelement die Verbindung der Leitung mit dem Anschluss für das Steuersignal gelöst werden muss und diese Verbindung dann nach Montage der neuen Lufttrocknungskartusche wieder hergestellt werden muss, womit ein erhöhter Montage- und Demontageaufwand verbunden ist. In weiterer Ausgestaltung der Erfindung wird hingegen vorgeschlagen, dass sich eine Steuerleitung, über welche ein Steuersignal zur Steuerung des Entlastungsventils übertragen wird, von dem Sockelelement-Ankopplungsbereich (zumindest teilweise) durch das Innere der Lufttrocknungskartusche zu dem Entlastungsventil-Ankopplungsbereich erstreckt. Auf diese Weise kann ermöglicht werden, dass die externe Leitung, über welche der Lufttrocknungskartusche das an anderer Stelle ausgesteuerte Steuersignal zugeführt wird, an das Sockelelement angeschlossen wird. Für eine Demontage der Lufttrocknungskartusche ist damit ein Lösen der Verbindung der externen Leitung von dem Sockelelement nicht erforderlich. Das Steuersignal gelangt in diesem Fall von der genannten externen Steuerleitung über den Eingangsanschluss des Sockelelements und den Sockelelement-Ankopplungsbereich zu der Steuerleitung, die sich durch das Innere der Lufttrocknungskartusche erstreckt. Auf diese Weise kann dann das Steuersignal dem Entlastungsventil-Ankopplungsbereich zugeführt werden, wovon dann das Steuersignal zu dem Entlastungsventil selbst gelangen kann.

Im Rahmen der Erfindung kann sich die Steuerleitung an beliebiger Stelle und mit beliebiger Ausrichtung und beliebiger Leitungsführung durch das Innere der Lufttrocknungskartusche erstrecken. Beispielsweise kann sich die Steuerleitung durch einen Zwischenraum zwischen einem Innengehäuse und einem Außengehäuse der Lufttrocknungskartusche, durch einen Kanal des Außengehäuses der Lufttrocknungskartusche oder eine Kammer der Lufttrocknungskartusche erstrecken. Für einen weiteren Vorschlag der Erfindung erstreckt sich die Steuerleitung durch ein Trocknungsmittel der Lufttrocknungskartusche.

Die Steuerleitung kann von einem beliebigen Bauelement der Lufttrocknungskartusche ausgebildet sein, welches nur diesem Zweck dient oder auch weitere Zwecke erfüllt. In weiterer Ausgestaltung der Lufttrocknungskartusche wird vorgeschlagen, dass ein Übertragungskörper vorhanden ist, welcher bspw. als langgestreckter Körper, als Rohr o. ä. ausgebildet sein kann. Der Übertragungskörper bildet dann die Steuerleitung aus und erstreckt sich durch das Innere der Lufttrocknungskartusche oder durch das Trocknungsmittel.

Der Übertragungskörper kann neben der Ausbildung der Steuerleitung zu beliebigen weiteren Zwecken dienen. Für einen erfindungsgemäßen Vorschlag ist der Übertragungskörper einstückig mit einem Aufnahmekörper für das Trocknungsmittel, einem Anschlussbereich zum elektrischen und/oder pneumatisch dichten Verbinden der Steuerleitung des Übertragungskörpers mit einem Anschlussbereich des Sockelelements und/oder einem Anschlussbereich zum elektrischen und/oder pneumatisch dichten Verbinden der Steuerleitung des Übertragungskörpers mit dem Entlastungsventil ausgebildet, womit der Bauaufwand reduziert werden kann.

Für einen besonderen Vorschlag der Erfindung erstreckt sich die Steuerleitung (oder der Übertragungskörper) im Bereich der oder koaxial zu der Längs- oder Rotationsachse der Lufttrocknungskartusche. Auf diese Weise kann eine Symmetrie der Lufttrocknungskartusche im Bereich der Steuerleitung bzw. des Übertragungskörpers nicht gestört werden. Von besonderer Bedeutung kann eine koaxiale Anordnung der Steuerleitung zu der Längs- oder Rotationsachse der Lufttrocknungskartusche sein, wenn eine Montage der Lufttrocknungskartusche mit dem Sockelelement mit einer drehenden Bewegung der Lufttrocknungskartusche erfolgt, wie dies bspw. für eine sogenannte Spin-On-Kartusche der Fall ist. Für derartige Spin-On-Kartuschen kann durch die Anordnung der Steuerleitung koaxial zu der Längs- oder Rotationsachse der Lufttrocknungskartusche der Weg, den der Anschlussbereich der Lufttrocknungskartusche zum elektrischen und/oder pneumatisch dichten Verbinden der Steuerleitung des Übertragungskörpers gegenüber dem zugeordneten Anschlussbereich des Sockelelements während der drehenden Bewegung zurücklegen muss, klein gehalten werden, womit ein zu überwindender Reibungsweg reduziert werden kann und die Beanspruchung von in diesen Anschlussbereichen angeordneten Dichtelementen reduziert werden kann.

Für einen erfindungsgemäßen Vorschlag ist die Steuerleitung eine pneumatische Steuerleitung für einen pneumatischen Steuerdruck. Hierbei kann der pneumatische Steuerdruck bspw. durch ein Magnetventil im Bereich des Sockelelements oder an anderer Stelle des Lufttrockners oder außerhalb des Lufttrockners, bspw. in einer Luftaufbereitungseinrichtung mit Mehrkreisschutzventilen, erzeugt werden.

Für einen anderen erfindungsgemäßen Vorschlag ist die Steuerleitung eine elektrische Steuerleitung für ein elektrisches Steuersignal, wobei das elektrische Steuersignal dann zur elektromagnetischen oder elektropneumatischen Umschaltung des Entlastungsventils genutzt sein kann.

Möglich ist, dass im Bereich des Entlastungsventils auch ein Heizelement vorhanden ist, um ein Einfrieren der Feuchtigkeit oder des Fluids, ggf. mit darin enthaltenen Verunreinigungen, im Bereich des Entlastungsventils zu vermeiden und den ordnungsgemäßen Betrieb des Entlastungsventils zu gewährleisten. In diesem Fall kann sich eine Heizleitung, über welche ein Heizsignal zur Steuerung des Heizelements im Bereich des Entlastungsventils übertragen wird, von dem Sockelelement-Ankopplungsbereich (zumindest teilweise) durch das Innere der Lufttrocknungskartusche zu dem Entlastungsventil-Ankopplungsbereich erstrecken. Hierbei gilt grundsätzlich für dieser Heizleistung das zuvor zu der Steuerleitung zur Ansteuerung des Entlastungsventils Gesagte: So kann bspw. die Heizleitung von oder an dem Übertragungskörper bereitgestellt sein, sich durch ein Trocknungsmittel der Lufttrocknungskartusche erstecken und sich im Bereich oder koaxial zu der Längs- oder Rotationsachse der Lufttrocknungskartusche erstrecken. Bei dem in der Heizleitung geführten Heizsignal kann es sich entweder um eine elektrische Leistungsversorgung des Heizelements handeln oder ein erwärmtes Heizfluid, welches über die Heizleitung dem Heizelement zugeführt wird.

Die Lufttrocknungskartusche kann grundsätzlich entsprechend den vielfältigen unterschiedlichen aus dem Stand der Technik bekannten Lufttrocknungskartuschen ausgebildet sein. In bevorzugter Ausgestaltung handelt es sich bei der Lufttrocknungskartusche um eine sogenannte Spin-On-Kartusche. Eine derartige Spin-On-Kartusche verfügt in dem Sockelelement-Ankopplungsbereich über ein Innengewinde, im Bereich dessen die Kartusche mit einem Außengewinde des Sockelelements verschraubt werden kann. Hierbei kann innenliegend von den genannten Gewinden der Eingang oder der Ausgang für die die Lufttrocknungskartusche durchströmende Druckluft gebildet sein. Alternativ oder kumulativ möglich ist, dass innenliegend von diesen Gewinden der Steuereingang für das Steuersignal zur Steuerung des Entlastungsventils angeordnet ist. Mit zunehmender Verschraubung wird der Sockelelement-Ankopplungsbereich an das Sockelelement angepresst, womit elektrische Verbindungen geschaffen werden können und/oder pneumatisch abgedichtete Verbindungen zwischen Lufttrocknungskartusche und Sockelelement geschaffen werden können.

Alternativ möglich ist, dass die Lufttrocknungskartusche als Einsatzkartusche ausgebildet ist. In diesem Fall kann in dem Lufttrockner ein Innenraum von dem Sockelelement und einem Gehäusedeckel des Lufttrockners begrenzt sein. In diesem Innenraum kann dann die Einsatzkartusche angeordnet sein und zwischen dem Sockelelement und dem Gehäusedeckel, bspw. auch verspannt durch eine Feder, gefangen sein.

Eine weitere Lösung der der Erfindung zugrunde liegende Aufgabe ist gegeben durch einen Lufttrockner, der über ein Sockelelement sowie eine an dem Sockelelement gehaltene Lufttrocknungskartusche, wie diese zuvor erläutert worden ist, gebildet ist.

In weiterer Ausgestaltung der Erfindung wird in dem Lufttrockner eine elektrische oder pneumatisch dichte Verbindung zwischen dem Sockelelement und dem Sockelelement-Ankopplungsbereich der Lufttrocknungskartusche automatisch geschaffen, wenn die Montage der Lufttrocknungskartusche mit dem Sockelelement erfolgt. Somit sind außer der genannten Montage keine weiteren Montageschritte zur Herstellung der Verbindung(en) erforderlich. Mit der erfolgten Montage ist dann die zuverlässige Übertragung des Steuersignals von dem Sockelelement zu der Steuerleitung der Lufttrocknungskartusche gewährleistet.

Vorzugsweise verfügt der Lufttrockner über einen Gehäusedeckel, der dann mit dem Sockelelement den Innenraum begrenzen kann, in dem die als Einsatzkartusche ausgebildete Lufttrocknungskartusche angeordnet sein kann. Für diese Ausgestaltung kann der Gehäusedeckel über eine Bajonett-Verbindung mit dem Sockelelement verbindbar oder verbunden sein. Es versteht sich, dass aber auch andere Verbindungen zwischen Gehäusedeckel und Sockelelement im Rahmen der Erfindung einsetzbar sind.

Für einen weiteren erfindungsgemäßen Lufttrockner kann ein Magnetventil, welches der Erzeugung eines Steuerdrucks für das Entlastungsventil dient, in das Sockelelement integriert sein. Der derart erzeugte Steuerdruck wird dann durch die Steuerleitung durch die Lufttrocknungskartusche hindurch an das Entlastungsventil übertragen.

Alternativ oder kumulativ möglich ist, dass in das Sockelelement ein Magnetventil integriert ist, welches der Steuerung einer Regeneration dient. Hierzu kann auch ein normalerweise eine Rückströmung sperrendes Rückschlagventil in das Sockelelement (bspw. in den Eingang) integriert sein. In einer das Rückschlagventil umgehenden Bypassleitung kann das genannte Magnetventil integriert sein, welches dann in einem geöffneten Zustand die Regeneration ermöglicht.

Grundsätzlich möglich ist, dass das Entlastungsventil oder Bestandteile desselben oder das Heizelement fester Bestandteil der Lufttrocknungskartusche ist. Dies hat aber zur Folge, dass bei einem Wechsel der Lufttrocknungskartusche die neue Lufttrocknungskartusche ebenfalls mit einem Entlastungsventil oder einem Heizelement ausgestattet sein muss, womit die Kosten und der Bauaufwand für die Lufttrocknungskartusche erhöht sind. Gemäß einem weiteren erfindungsgemäßen Vorschlag ist das Entlastungsventil oder sind/ist ein Ventilsitz, ein Ventilkörper, ein Ventilkolben und/oder eine Ventilfeder des Entlastungsventils lösbar mit dem Gehäusedeckel und/oder der Lufttrocknungskartusche verbunden. Möglich ist auch, dass das Heizelement lösbar mit dem Gehäusedeckel und/oder der Lufttrocknungskartusche verbunden ist. Somit kann für einen Wechsel eines Gehäusedeckels oder der Lufttrocknungskartusche zunächst eine Demontage des Entlastungsventils oder der Ventilelemente desselben und/oder des Heizelements erfolgen, dann der Austausch der Lufttrocknungskartusche erfolgen und eine erneute Montage derselben Komponenten des Entlastungsventils oder des Heizelements erfolgen, womit unabhängig von dem Wechsel der Lufttrocknungskartusche dasselbe Entlastungsventil oder Heizelement eingesetzt werden kann.

Eine weitere Lösung der der Erfindung zugrunde liegenden Aufgabe ist gegeben durch ein Nutzfahrzeug, welches mit einer Lufttrocknungskartusche oder einem Lufttrockner ausgestattet ist, wie diese zuvor beschrieben worden sind. Für die erfindungsgemäße Lösung ist die Lufttrocknungskartusche (insbesondere mit vertikaler Längsachse) oder seitlich (insbesondere mit horizontaler Längsachse) an das Sockelelement montiert.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.

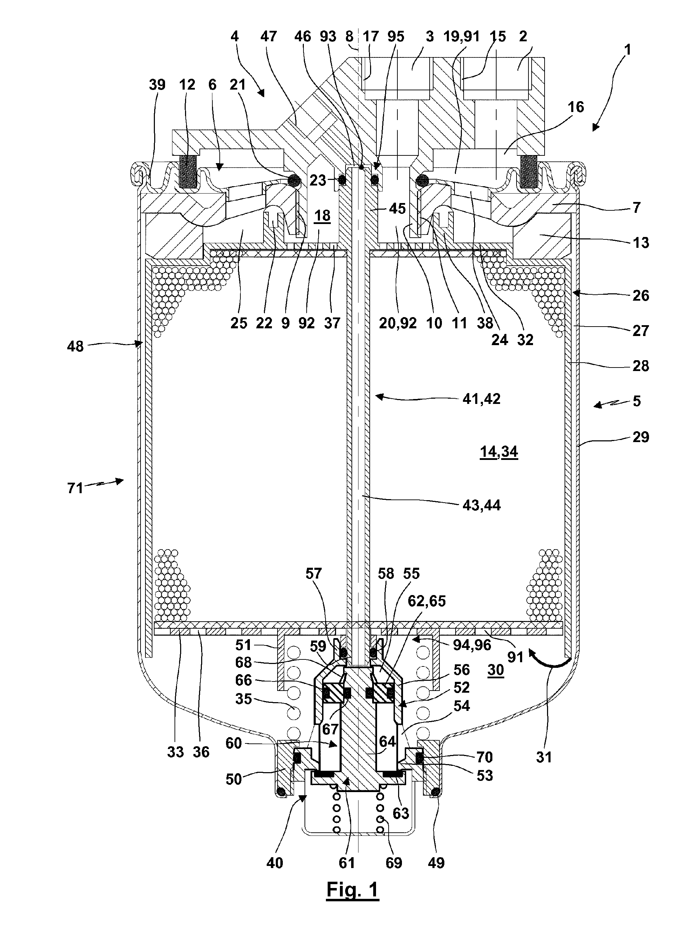

- **Fig. 1 bis 6**: zeigen in einem Längsschnitt Ausführungsbeispiele eines Lufttrockners mit einer Lufttrocknungskartusche.

### FIGURENBESCHREIBUNG

**Fig. 1** zeigt einen Lufttrockner 1. Der Lufttrockner 1 ist Teil einer Druckluftanlage eines Nutzfahrzeugs. In der Druckluftanlage ist ein Eingang 2 des Lufttrockners 1 mit einer Druckluftquelle, insbesondere einem Kompressor, verbunden, während ein Ausgang 3 des Lufttrockners 1 mit Verbrauchern des Nutzfahrzeugs (bspw. einem ersten und zweiten Betriebsbremskreis, einem Luftfederungskreis, einem Nebenverbraucherkreis und/oder einem Anhängerbremskreis) verbunden ist, was insbesondere unter Zwischenschaltung eines Mehrkreisschutzventils zwischen den Ausgang 3 und die genannten Verbraucherkreise erfolgt. Hinsichtlich der grundsätzlichen Ausgestaltung der Druckluftanlage, in welcher der Lufttrockner 1 Einsatz finden kann, wird auf den vielfältigen diesbezüglichen Stand der Technik verwiesen.

Gemäß Fig. 1 weist der Lufttrockner 1 ein Sockelelement 4, welches hier einstückig ausgebildet ist und bspw. als Gussteil oder Gussplatte ausgebildet ist, sowie eine Lufttrocknungskartusche 5 auf. In der in Fig.1 dargestellten Einbausituation ist die Lufttrocknungskartusche 5 mit vertikal orientierter Längsachse 8 von unten an das Sockelelement 4 montiert. Hierbei tritt die Lufttrocknungskartusche 5 im Bereich eines Sockelelement-Ankopplungsbereichs 6, der von der oberen Stirnseite der Lufttrocknungskartusche 5 ausgebildet wird, in Wirkverbindung mit dem Sockelelement 4. Diese Wirkverbindung stellt eine Befestigung der Lufttrocknungskartusche 5 an dem Sockelelement 4 bereit und dient der abgedichteten und jeweils gesonderten Übertragung von Druckluft, bei welcher es sich um einen steuernden Druckluftstrom und/oder den Strom der zu trocknenden Druckluft zwischen der Lufttrocknungskartusche 5 und dem Sockelelement 4 handeln kann. Das Sockelelement ist fest an dem Nutzfahrzeug, bspw. an einem Fahrzeugrahmen desselben oder anderen hieran abgestützten Bauelementen, befestigt.

Gemäß Fig. 1 ist die Lufttrocknungskartusche 5 als sogenannte "Spin-On-Kartusche" ausgebildet. Zu diesem Zweck verfügt die Lufttrocknungskartusche 5 über einen hier oben angeordneten Grundkörper 7, der eine koaxial zu der Längs- oder Rotationsachse 8 der Lufttrocknungskartusche 5 orientierte Bohrung mit Innengewinde 9 aufweist. Das Sockelelement 4 weist einen hier hülsenartigen Fortsatz 10 auf, welcher über ein mit dem Innengewinde 9 korrespondierendes Außengewinde 11 besitzt. Somit kann die Lufttrocknungskartusche 5 mit dem Innengewinde 9 von unten auf das Außengewinde 11 des Sockelelements 4 aufgeschraubt werden, wozu die Lufttrocknungskartusche 5 um die Längs- oder Rotationsachse 8 verdreht wird. Mit zunehmender Verschraubung nähert sich der Sockelelement-Ankopplungsbereich 6 der Lufttrocknungskartusche 5 zunehmend der zugewandten Stirnseite des Sockelelements 4 an, womit ein ringförmiges Dichtelement 12, welches lateral außenliegend im Bereich des Sockelelement-Ankopplungsbereichs 6 der Lufttrocknungskartusche 5 an diesem gehalten ist, zwischen der Stirnseite des Sockelelements 4 und dem Sockelelement-Ankopplungsbereich 6 verspannt wird, so dass in montiertem Zustand der Lufttrockner 1 im Bereich der Schnittstelle zwischen Sockelelement 4 und Lufttrocknungskartusche 5 nach außen abgedichtet ist.

Zur Reinigung der Druckluft durchströmt Druckluft von dem Eingang 2 ein Filterelement 13 und ein Trocknungsmittel 14 auf dem Weg zu dem Ausgang 3. Wie aus dem Stand der Technik bekannt ist, kann hierzu je nach Bedarf die Ausgestaltung des mindestens einen Trocknungsmittels 14 und/oder des mindestens einen Filterelements 13 variiert werden, wobei auch beliebige Reihenfolgen von dem mindestens einem Filterelement 13 und dem mindestens einen Trocknungsmittel 14 möglich sind.

Für das Ausführungsbeispiel gemäß Fig. 1 wird die Strömung der Druckluft durch den Lufttrockner 1 wie folgt gewährleistet:
Im Bereich des Eingangs 2 des Sockelelements 4 ist ein Eingangsanschluss 15 gebildet, welcher mit einer Sockelelement-Eingangskammer 16 auf der dem Sockelelement-Ankopplungsbereich 6 der Lufttrocknungskartusche 5 zugewandten unteren Stirnseite des Sockelelements 4 permanent pneumatisch verbunden ist. Entsprechend ist im Bereich des Ausgangs 3 des Sockelelements 4 gebildeter Ausgangsanschluss 17 permanent pneumatisch verbunden mit einer Sockelelement-Ausgangskammer 18, welche ebenfalls auf der Unterseite des Sockelelements 4 auf der dem Sockelelement-Ankopplungsbereich 6 der Lufttrocknungskartusche 5 zugewandten Stirnseite des Sockelelements 4 angeordnet ist. Für das dargestellte Ausführungsbeispiel ist die Sockelelement-Ausgangskammer 18 in der Innenbohrung des hülsenartigen Fortsatzes 10 gebildet.

In dem Sockelelement-Ankopplungsbereich 6 bildet die Lufttrocknungskartusche 5 einen Eingang 91, hier in Form einer Lufttrocknungskartuschen-Eingangskammer 19, sowie einen Ausgang 92, hier in Form einer Lufttrocknungskartuschen-Ausgangskammer 20. In dem montierten Zustand erfolgt unter Abdichtung ein Übertritt von Druckluft von der SockelelementEingangskammer 16 zu der Lufttrocknungskartuschen-Eingangskammer 19. Entsprechend erfolgt ein Übertritt von Druckluft von der Lufttrocknungskartuschen-Ausgangskammer 20 zu der Sockelelement-Ausgangskammer 18. Die Lufttrocknungskartuschen-Eingangskammer 19 ist als Ringkammer ausgebildet, welche radial außenliegend gegenüber der Umgebung durch das Dichtelement 12 abgedichtet ist und radial innenliegend durch ein weiteres ringförmiges Dichtelement 21, welches im Bereich des Sockelelement-Ankopplungsbereichs 6 zwischen der Lufttrocknungskartusche 5 und dem Sockelelement 4 verspannt ist, abgedichtet. Auch die Lufttrocknungskartuschen-Ausgangskammer 20 ist als Ringkammer ausgebildet mit Abdichtung radial außenliegend durch Dichtelemente 21, 22 sowie radial innenliegend durch ein weiteres ringförmiges Dichtelement 23, auf welches im Folgenden noch eingegangen wird. Durch die ringförmige Ausbildung der Kammern 19, 20 kann der abgedichtete Übertritt der Druckluft unabhängig davon gewährleistet werden, um welchen Drehwinkel die Lufttrocknungskartusche 5 mit dem Aufschrauben auf das Sockelelement 4 um die Längs- oder Rotationsachse 8 verdreht worden ist.

Die zu reinigende Druckluft strömt von der Lufttrocknungskartuschen-Eingangskammer 19, die den Eingang 91 der Lufttrocknungskartusche 5 bildet, durch mehrere über den Umfang verteilte, parallel zur Längs- oder Rotationsachse 8 orientierte Bohrungen 24 des Grundkörpers 7. Über einen Strömungskanal 25, welcher zwischen der Unterseite des Grundkörpers 7 und der Oberseite einer Deckenplatte 32 eines Aufnahmekörpers 26 für das Trocknungsmittel 14 gebildet ist, gelangt die Druckluft mit einer radial nach außen orientierten Strömungskomponente zu dem Filterelement 13, welches zwischen der Unterseite des Grundkörpers 7 und der Oberseite der Deckenplatte 32 des Aufnahmekörpers 26 verspannt ist. Nach Durchströmung des Filterelements 13 gelangt die Druckluft in einen hohlzylindrischen Zwischenraum 27, welcher zwischen einer hohlzylindrischen Wandung 28 des Aufnahmekörpers 26 und einem hohlzylindrischen Außengehäuse 29 der Lufttrocknungskartusche 5 gebildet ist. Durch den Zwischenraum 27 strömt die Druckluft vertikal nach unten in eine untere Kammer 30 der Lufttrocknungskartusche 5, in welcher die Druckluft eine Umlenkung 31 erfährt.

Der Aufnahmekörper 26 für das Trocknungsmittel 14 besitzt in dem dargestellten Längsschnitt in grober Näherung die Form eines umgekehrten U, wobei der Grundschenkel des U von der Deckenplatte 32 gebildet ist, während die Seitenschenkel des U von der Wandung 28 ausgebildet werden. Verschieblich in die nach unten weisende Öffnung des U bzw. des Aufnahmekörpers 26 ist eine Bodenplatte 33 eingesetzt. Die Bodenplatte 33 und der Aufnahmekörper 26 begrenzen einen zylindrischen Innenraum 34, in welchem das Trocknungsmittel 14 gefangen ist. Die Bodenplatte 33 wird hierbei durch eine koaxial zur Längs- oder Rotationsachse 8 wirkende Druckfeder 35 beaufschlagt, womit eine gewisse Verpressung des Trocknungsmittels 14 in dem Aufnahmekörper 26 erreicht wird.

Nach der Umlenkung 31 durchströmt die Druckluft Bohrungen 36 der Bodenplatte 33, den Innenraum 34 mit dem Trocknungsmittel 14 und Bohrungen 37 der Deckenplatte 32 und gelangt schließlich in die den Ausgang 92 der Lufttrocknungskartusche 5 bildende Lufttrocknungskartuschen-Ausgangskammer 20 mit dem daran folgenden Übertritt zu dem Ausgangsanschluss 17 des Sockelelements 4. Die Deckenplatte 32 trägt (hier einstückig) einen ringförmigen Fortsatz 38, an dem das Dichtelement 22 gehalten ist. Für das dargestellte Ausführungsbeispiel ist der Grundkörper 7 im Sockelelement-Ankopplungsbereich 6 durch ein Deckenblech 39 abgedeckt, welches zur Aufnahme des Dichtelements 12 verformt oder gefaltet ist und im außenliegenden Randbereich zur Verbindung mit der hier ebenfalls von einem Blech gebildeten Wandung 28 des Aufnahmekörpers 26 verformt oder umbördelt ist.

Im Sockelelement-Ankopplungsbereich 6 der Lufttrocknungskartusche 5, welcher auf der dem Sockelelement 4 zugewandten Stirnseite der Lufttrocknungskartusche 5 gebildet ist und in eingebautem Zustand oben angeordnet ist, befinden sich das Dichtelement 12, die Lufttrocknungskartuschen-Eingangskammer 19, das Dichtelement 21, das Innengewinde 9 und die Sockelelement-Ausgangskammer 18.

Für die erfindungsgemäße Ausgestaltung besitzt die Lufttrocknungskartusche 5 im Bereich der unteren Kammer 30 in einem Entlastungsventil-Ankopplungsbereich ein Entlastungsventil 40, welches in geöffnetem Zustand für eine Beseitigung von Feuchtigkeit, Fluiden oder Verunreinigungen aus dem Inneren der Lufttrocknungskartusche 5 die untere Kammer 30 mit der Umgebung verbindet. Das Entlastungsventil 40 ist als 2/2-Wegeventil ausgebildet. Das Entlastungsventil nimmt infolge der Beaufschlagung durch eine Ventilfeder 69 ohne Ansteuerung seine Sperrstellung ein und nimmt bei hier pneumatischer Ansteuerung seine Öffnungsstellung ein. Wird das Entlastungsventil 40 geöffnet, nimmt die Druckluft Verunreinigungen, Feuchtigkeit und Fluide aus dem Trocknungsmittel 14, dem Filterelement 13, aus anderen Komponenten, Kanälen und Kammer und insbesondere im Bereich der unteren Kammer 30 gesammelte Fluide, Feuchtigkeit und Verunreinigungen mit und führt diese in die Umgebung ab. Das pneumatische Steuersignal für die Ansteuerung des Entlastungsventils 40 wird über einen Übertragungskörper 41 durch den Innenraum 34 und durch das Trocknungsmittel 14 hindurch von dem Sockelelement-Ankopplungsbereich 6 zu dem Entlastungsventil 40 übertragen. Für das Ausführungsbeispiel gemäß Fig. 1 ist der Übertragungskörper 41 als Rohr 42 mit einer Innenbohrung 43 ausgebildet. Die Innenbohrung 43 bildet eine Steuerleitung 44 für einen Steuerdruck.

In dem oberen Endbereich mündet die Steuerleitung 44 des Übertragungskörpers 41 in einen hülsenartigen Fortsatz 45, welcher Teil des Sockelelement-Ankopplungsbereichs 6 ist und einen Anschlussbereich 95 bildet, über welchen die Steuerleitung 44 der Lufttrocknungskartusche 5 mit einem Steuereingang 93 des Sockelelements 4 verbunden ist. Der Fortsatz 45 tritt mit dem Anschlussbereich 95 hierzu unter Abdichtung durch das Dichtelement 23 in eine Ausnehmung 46 des Sockelelements 4 ein. Die Ausnehmung 46 ist pneumatisch verbunden mit dem Steuereingang 93, der einen Steueranschluss 47 aufweist. Somit kann ein an dem Steueranschluss 47 erzeugter Steuerdruck über den Übertragungskörper 41 und die Steuerleitung 44 desselben durch das Innere der Lufttrocknungskartusche 5 auf die andere Seite zu dem Entlastungsventil 40 übertragen werden. Ohne dass dies zwingend der Fall ist, ist für das dargestellte Ausführungsbeispiel der Übertragungskörper 41 einstückig mit dem Aufnahmekörper 26 ausgebildet, wobei der auf diese Weise gebildete Einsatzkörper 48 bspw. als Tiefzieh- oder Spritzgussteil ausgebildet sein kann.

Das Entlastungsventil 40 ist auf der dem Sockelelement 4 abgewandten Seite in dem Entlastungsventil-Ankopplungsbereich 94 der Lufttrocknungskartusche 5 angeordnet. Das domartig geformte Außengehäuse 29 ist fest und unter Abdichtung durch ein Dichtelement 49 mit einem eine Öffnung vorgegebenen Ringflansch 50 verbunden. Die Druckfeder 35 ist unter Vorspannung zwischen der innenliegenden ringförmigen Stirnfläche des Ringflansches 50 und der Bodenplatte 33 verspannt, wobei zur Führung der Druckfeder 35 die Bodenplatte 33 (hier einstückig) eine nach unten in die untere Kammer 30 hervorstehende Führungshülse 51 aufweisen kann. In ein Innengewinde des Ringflansches 50 ist (unter Abdichtung durch ein Dichtelement 70) ein Einsatzkörper 52 eingeschraubt. Der Einsatzkörper 52 ist grundsätzlich in Form einer abgestuften Hülse ausgebildet, wobei
- mit einer Stufe im untenliegenden Endbereich ein Ventilsitz 53 gebildet ist,
- Durchgangsausnehmungen 54 einen Übertritt von Druckluft mit Feuchtigkeit, Fluiden und Verunreinigungen in das Innere des Einsatzkörpers 52 und für geöffnetes Entlastungsventil 40 von dort in die Umgebung ermöglichen,
- der Einsatzkörper 52 einen eine Druckkammer 55 begrenzenden Zylinderbereich 56 bildet und
- der Einsatzkörper 52 in dem oberen Endbereich mit einem Verbindungsbereich 57 unter Abdichtung mittels eines Dichtelements 58 mit einem nach unten aus der Bodenplatte 33 hervorstehenden Endbereich 59 des Übertragungskörpers 41, der einen Anschlussbereich 96 der Lufttrocknungskartusche 5 für dessen Verbindung mit dem Entlastungsventil 40 bildet, verbunden ist.

Ein Ventilkörper 60 des Entlastungsventils 40 ist für das dargestellte Ausführungsbeispiel mit zwei Ventilkörperteilen 61, 62 ausgebildet, die hier fest miteinander verbunden sind. Das Ventilkörperteil 61 bildet sowohl einen Ventilteller 63 als auch einen Ventilstößel 64 aus, die einstückig in der Form eines umgekehrten T ausgebildet sind. Der Ventilteller 63 bildet hierbei den Horizontalschenkel des T, während der Ventilstößel 64 den Vertikalschenkel des T, der koaxial zur Längsachse 8 orientiert ist. In dem dem Ventilteller 63 abgewandten Endbereich trägt der Ventilstößel 64 das Ventilkörperteil 62, welches als Ringkolben 65 ausgebildet ist. Der Ringkolben 65 ist unter Abdichtung durch ein Dichtelement 66 verschieblich gegenüber der Innenfläche des Zylinderbereichs 56 geführt, radial innenliegend über ein Dichtelement 67 gegenüber dem Ventilstößel 64 abgedichtet und für das dargestellte Ausführungsbeispiel auf den Ventilstößel 64 von oben aufgeschoben gegen einen Absatz des Ventilstößels 64 und in dieser aufgeschobenen Axialstellung durch ein Rastelement 68 gesichert. Die Druckkammer 55, über welche der Ringkolben 65 beaufschlagt wird, steht über einen Zwischenraum zwischen den benachbarten Stirnseiten einerseits des Ventilstößels 64 und andererseits des Übertragungskörpers 41 oder radialen Bohrungen des Endbereichs 59 des Übertragungskörpers 41 pneumatisch in Verbindung mit der Steuerleitung 44. Ohne Druck an dem Steueranschluss 47 und in der Steuerleitung 43 sowie der Druckkammer 55 wird durch die Ventilfeder 69 der Ventilkörper 60 mit dem Ventilteller 63 gegen den Ventilsitz 53 gepresst, womit das Entlastungsventil 40 geschlossen ist. Hingegen führt die Druckbeaufschlagung des Steueranschlusses 47, der Steuerleitung 43 und der Druckkammer 55 zu einer Öffnungskraft, die auf den Ringkolben 65 wirkt und den Ventilkörper 60 aus der in Fig. 1 dargestellten Betriebsstellung entgegen der Beaufschlagung durch die Feder 69 in Öffnungsrichtung bewegt, womit zwischen dem Ventilsitz 53 und dem Ventilteller 63 ein Übertrittsquerschnitt in die Umgebung geschaffen wird.

Für das Ausführungsbeispiel gemäß Fig. 1 bildet die Lufttrocknungskartusche 5 eine handelsfähige Baueinheit, bei welcher das Außengehäuse 29 mit dem Entlastungsventil 40 und dem Deckenblech 39 sowie dem Grundkörper 7 bis auf den Steuereingang 93, den Eingang 91 und den Ausgang 92 bzw. die Kammern 19, 20 im Sockelelement-Ankopplungsbereich 6 gegenüber der Umgebung geschlossen ist.

Möglich ist für diese Ausführungsform auch, dass die Lufttrocknungskartusche 5 ohne die Bauelemente des Entlastungsventils 40 ausgeliefert wird und bei einem Wechsel der Lufttrocknungskartusche 5 das Entlastungsventil 40 aus der alten Lufttrocknungskartusche demontiert wird und dann nochmals mit der neuen Lufttrocknungskartusche 5 verwendet wird.

Für die Ausbildung der Lufttrocknungskartusche 5 als Einsatzkartusche 72 ist die Bodenplatte 33 im lateralen Randbereich wie dargestellt mit der Wandung 28 des Aufnahmekörpers 26 verrastet.

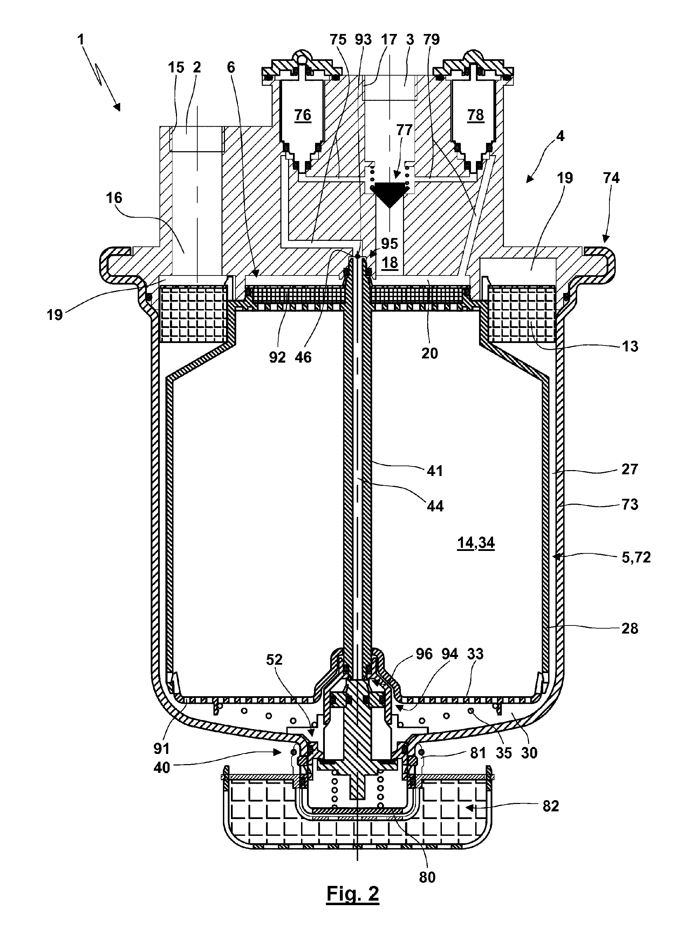

Während gemäß Fig. 1 die Lufttrocknungskartusche 5 als Spin-On-Kartusche 71 ausgebildet ist, zeigt **Fig. 2** eine Ausbildung der Lufttrocknungskartusche 5 als Einsatzkartusche 72. Die Einsatzkartusche 72 verfügt nicht als Bestandteil der handelsfähigen Einheit über ein Außengehäuse 29, welches die Lufttrocknungskartusche 5 bis auf die pneumatischen Verbindungen im Sockelelement-Ankopplungsbereich 6 gegenüber der Umgebung abdichtet. Vielmehr findet hier anstelle des Außengehäuses 29 ein Gehäusedeckel 63 Einsatz, der bspw. über eine Bajonett-Verbindung 74 mit dem Sockelelement 4 verbunden werden kann und mit diesem einen Innenraum begrenzt, in welchem dann die Einsatzkartusche 72 angeordnet ist. In diesem Fall ist das Filterelement 13 zwischen der Einsatzkartusche 72, dem Gehäusedeckel 73 und dem Sockelelement 4 verspannt. In axialer Richtung ist die Einsatzkartusche 72 unter Vorspannung durch die Druckfeder 35 zwischen dem Gehäusedeckel 37 und dem Sockelelement 4 gefangen.

Während gemäß Fig. 1 der Steuerdruck für das Entlastungsventil 40 außerhalb des Lufttrockners 1 erzeugt worden ist und dann dem Steueranschluss 47 zugeführt worden ist, verfügt das Sockelelement 4 gemäß Fig. 2 nicht über einen Steuereingang 93. Für dieses Ausführungsbeispiel ist der Ausgang 3 über eine Zweigleitung 75 mit der Ausnehmung 46 und dem Steuereingang 93 im Anschlussbereich 95 der Lufttrocknungskartusche 5 und damit der Steuerleitung 44 in dem Übertragungskörper 41 verbunden. In die Zweigleitung 75 ist ein Magnetventil 76 integriert, welches als 3/2-Wegeventil ausgebildet ist und in einer Belüftungsstellung die Zweigleitung 75 öffnet, so dass der Druck an dem Ausgang 3 als Steuerdruck in die Steuerleitung 44 gelangt, während dieses in einer Entlüftungsstellung die Verbindung zu dem Ausgang 3 absperrt und den Steuereingang 93 mit einer Entlüftung verbindet. Das Sockelelement 4 oder das Magnetventil 76 selbst besitzt in diesem Fall einen elektrischen Steueranschluss, über welchen mit einem elektrischen Steuersignal von einer externen Steuereinheit das Magnetventil 76 zur Ansteuerung des Entlastungsventils 40 angesteuert wird.

Alternativ oder kumulativ kann gemäß Fig. 2 zwischen den Ausgang 92 der Lufttrocknungskartusche, hier die Sockelelement-Ausgangskammer 18, und den Ausgang 3 des Sockelelements ein in Richtung des Ausgangs 3 öffnendes Rückschlagventil 77 angeordnet sein. In diesem Fall kann ein weiteres Magnetventil 78 in eine Bypassleitung 79 integriert sein, die einen Bypass für das Rückschlagventil 77 bildet und den Ausgang 92 der Lufttrocknungskartusche, hier die Lufttrocknungskartuschen-Ausgangskammer 20, bzw. die Sockelelement-Ausgangskammer 18 mit dem Ausgang 3 des Sockelelements 4 verbindet. Das Magnetventil 78 ist vorzugsweise als 2/2-Wegeventil ausgebildet. In einer Sperrstellung schließt dieses die Bypassleitung 79, in welcher in einer Lastphase eines Kompressors die Förderung der Druckluft durch die Lufttrocknungskartusche 5 erfolgen kann und die Druckluft über das geöffnete Rückschlagventil 77 zu dem Ausgang 3 gelangen kann, aber eine Rückströmung bei Eingriff eines Druckreglers oder Deaktivierung des Kompressors infolge des dann sperrenden Rückschlagventils 77 unterbunden ist. Wird hingegen das Magnetventil 78 in seine Öffnungsstellung gesteuert, kann die Druckluft in umgekehrter Richtung durch die Lufttrocknungskartusche 5 von dem Ausgang 3 zu dem Eingang 2 strömen unter Umgehung des Rückschlagventils 77, was für eine Regeneration des Trocknungsmittels oder (bei gleichzeitiger Öffnung des Entlastungsventils 40) für die Ableitung von Druckluft mit Feuchtigkeit, Fluiden oder Verunreinigungen in die Umgebung genutzt werden kann.

Für eine besonders kompakte Ausgestaltung ist gemäß Fig. 2 die Bodenplatte 33 im Bereich des Entlastungsventil-Ankopplungsbereichs 94 in Richtung des Innenraums 34 im radial innenliegenden Bereich konkav ausgebildet, so dass das Entlastungsventil 40 teilweise in diese konkave Einformung eintreten kann.

Gemäß Fig. 2 ist bei Fig. 1 entsprechender Funktion des Entlastungsventils 40 eine andere konstruktive Ausgestaltung des Entlastungsventils 40 gewählt: In diesem Fall ist der Einsatzkörper 52 nicht in einen Ringflansch des Gehäusedeckels 73 eingeschraubt. Vielmehr ist in diesem Fall der Einsatzkörper 52 mit einem haubenartigen Deckel 80 verrastet. Der Deckel 80 mit dem daran verrasteten Einsatzkörper 52 und im Inneren angeordnetem Ventilkörper 60 und Ventilfeder 69 bildet damit eine Baueinheit, welche an die untere Öffnung des Gehäusedeckels 73 angesetzt bzw. in diese eingesetzt werden kann. Die Sicherung dieser Baueinheit gegenüber dem Gehäusedeckel 73 erfolgt über ein Rast- und Spannelement 81, welche den unteren Endbereich des Gehäusedeckels 73 sowie den Deckel 80 fest umgreift. An dem Spannelement 81 oder dem Deckel 80 kann dann noch ein Entlüftungs-Schalldämpfer 82 angebracht sein.

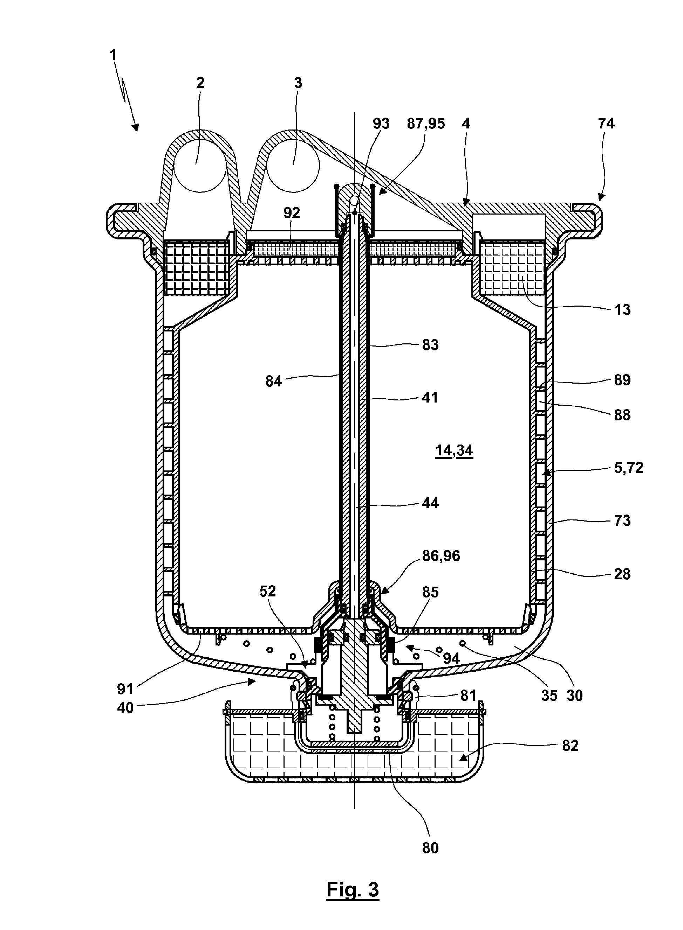

Für das Ausführungsbeispiel gemäß Fig. 3 stellt der Übertragungskörper 41 zusätzlich zu der Steuerleitung 44 Steuerleitungen 83, 84 bereit. Bei den Steuerleitungen 83, 84 handelt es sich um elektrische Leitungen für ein elektrisches Steuersignal oder eine gesteuerte elektrische Leistungsversorgung. Möglich ist, dass über eine derartige Steuerleitung 83, 84 ein elektrisches Steuersignal zu der elektrischen Ansteuerung eines dann elektromagnetisch ausgebildeten Entlastungsventils 40 dient. Für das dargestellte Ausführungsbeispiel werden aber die Steuerleitungen 83, 84 genutzt, um eine elektrische Leistungsversorgung durch die Lufttrocknungskartusche 5 hindurch zu einem Heizelement 85 des Entlastungsventils 40 zu übertragen, über welches vermieden werden soll, dass das Entlastungsventil 40 einfriert oder Feuchtigkeit oder ein Fluid im Bereich der unteren Kammer 30 einfriert. Für das dargestellte Ausführungsbeispiel sind die Steuerleitungen 83, 84 im Bereich der Mantelfläche des Übertragungskörpers 41 vorgesehen, wobei diese gegenüber einem Kontakt mit dem Trocknungsmittel 14 isoliert und gegenüber mechanischen Beschädigungen geschützt sind. Möglich ist, dass die Steuerleitungen 83, 84 automatisch über den Anschlussbereich 96, hier eine elektrische Schnittstelle 86, mit entsprechenden Steuerleitungen des Entlastungsventils 40 gekoppelt werden mit der Montage des Entlastungsventils 40 an dem Übertragungskörper 41. Entsprechend können die Steuerleitungen 83, 84 in dem Sockelelement-Ankopplungsbereich 6 der Lufttrocknungskartusche 5 mit der Montage der Lufttrocknungskartusche 5 an dem Sockelelement 4 mit dem Anschlussbereich 95, hier einer elektrischen Schnittstelle 87, unmittelbar mit Steuerleitungen des Sockelelements 4, welche dann mit elektrischen Anschlüssen des Sockelelements 4 verbunden sind, verbunden werden.

Während gemäß Fig. 2 die Druckluft von dem Filterelement 13 vertikal nach unten durch den Zwischenraum 27 zu der unteren Kammer 30 strömen kann, wird die Druckluft gemäß Fig.3 auf dem Weg von dem Filterelement 13 zu der unteren Kammer 30 in der Art eines Zyklons entlang eines wendelförmigen Kanals 88 geführt, um eine verbesserte Abscheidewirkung für Fluide, Feuchtigkeit und/oder Verunreinigungen herbeizuführen. Hierbei ist der wendelförmige Kanal 88 radial innenliegend begrenzt von der Wandung 28, radial außenliegend begrenzt von dem Gehäusedeckel 73 und in Richtung der Längs- oder Rotationsachse 8 begrenzt durch wendelförmig um die Wandung 28 umlaufende Rippen 89, welche mit einem geringen Spalt oder einer Übergangspassung oder Anpressung mit ihrer Stirnseite an der Innenfläche des Gehäusedeckels 73 anliegen.

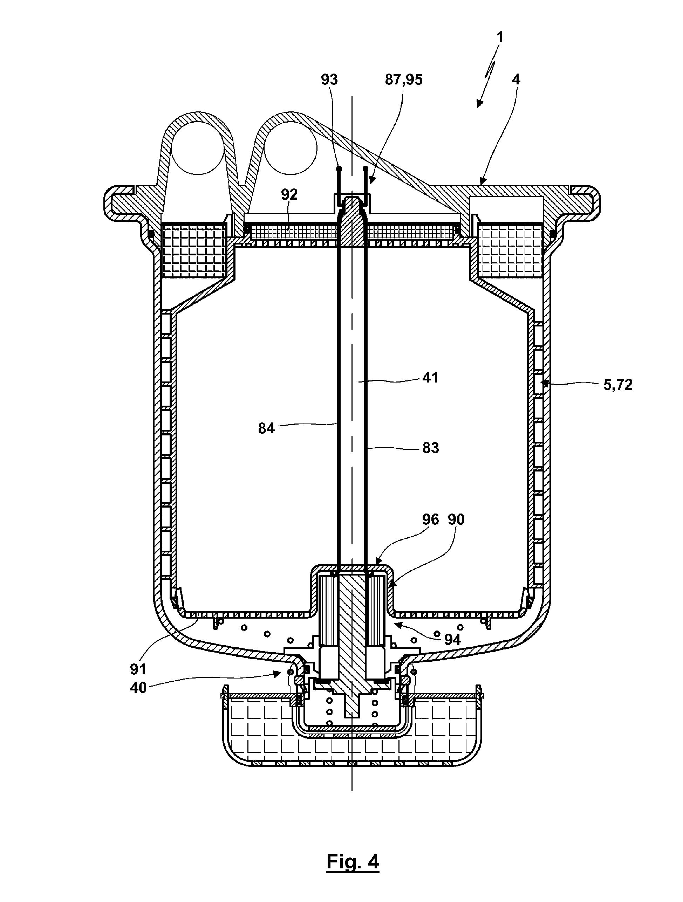

Bei ansonsten Fig. 3 entsprechender Ausgestaltung zeigt **Fig. 4** die Ausbildung des Übertragungskörpers 41 ohne Steuerleitung 44 für die Übertragung eines fluidischen Steuerdrucks für das Entlastungsventil 40. Vielmehr sind hier lediglich die Steuerleitungen 83, 84 vorhanden, über welche dann ein elektromagnetischer Aktuator 90 je nach elektrischer Beaufschlagung der Steuerleitungen 83, 84 das Entlastungsventil 40 in die Öffnungs- und Schließstellung überführen kann.

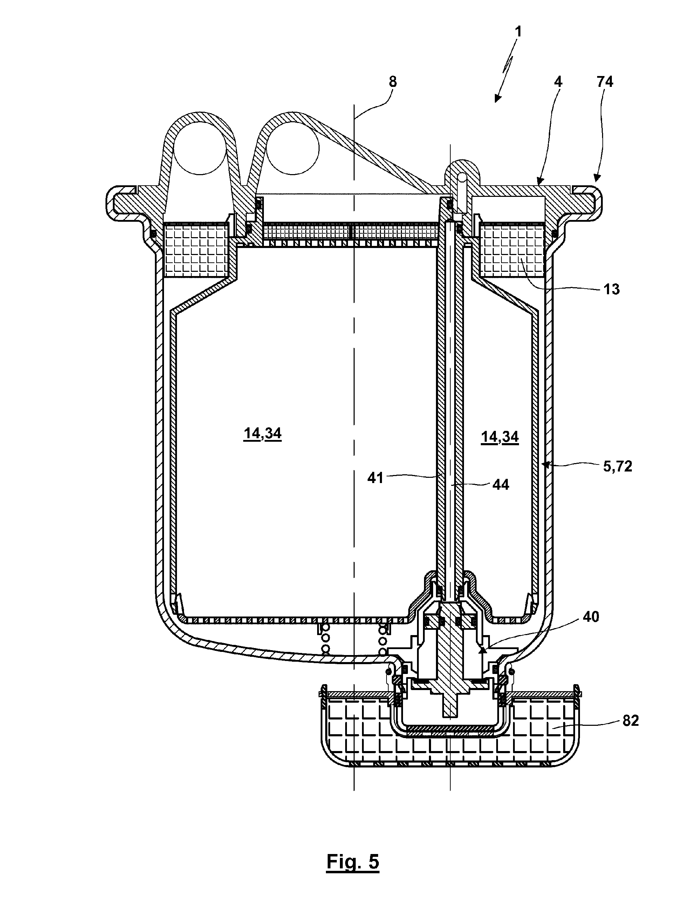

Während sich gemäß den Ausführungsbeispielen gemäß Fig. 1 bis 4 der Übertragungskörper 41 koaxial zur Längs- oder Rotationsachse 8 erstreckt hat, zeigt **Fig. 5** eine Ausführungsform, bei welcher sich der Übertragungskörper 41 und mit diesem die Steuerleitung 44 nicht zentral und koaxial zur Längsachse 8 durch die Lufttrocknungskartusche 5 erstreckt, sondern dies vielmehr exzentrisch oder beabstandet zur Längs- oder Rotationsachse 8 bei paralleler Anordnung zu dieser erfolgt. In diesem Fall ist auch das Entlastungsventil 40 mit dem Entlüftungs-Schalldämpfer 82 außermittig angeordnet.

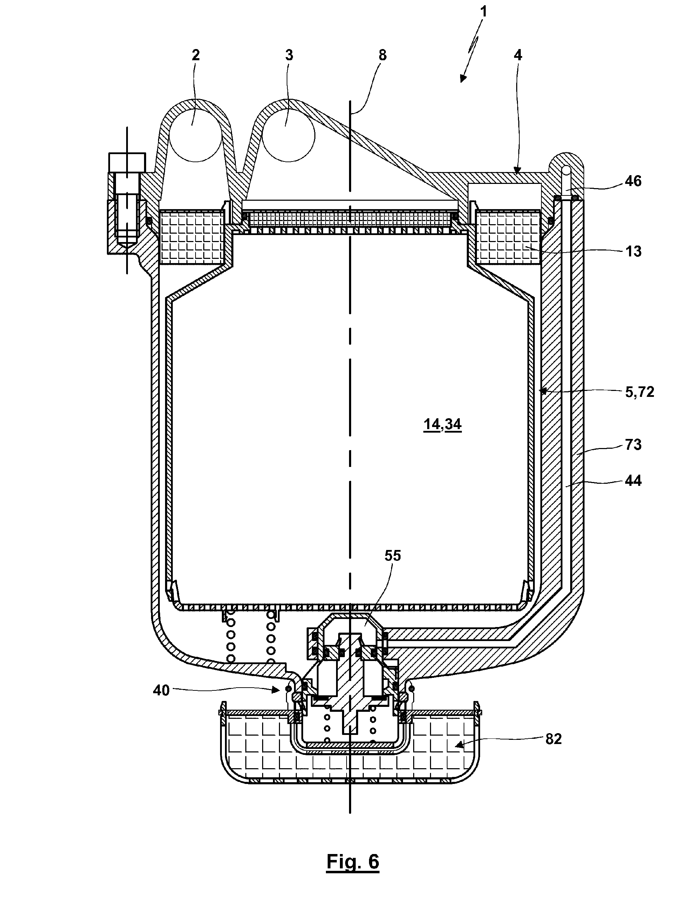

Schließlich zeigt **Fig. 6** eine Ausführungsform, bei welcher sich die Steuerleitung 44 nicht durch das Trocknungsmittel 14 und im Inneren des Aufnahmekörpers 26 für dieses erstreckt. Vielmehr erstreckt sich die Steuerleitung 44 in diesem Fall im Inneren des Gehäusedeckels 73 und verbindet eine Ausnehmung 46, welche mit dem Steueranschluss 47 verbunden ist, mit dem Druckraum 55 des Entlastungsventils 40.

In Fig. 6 ist anstelle einer Bajonett-Verbindung eine Schraubverbindung zur Verbindung des Gehäusedeckels 73 mit dem Sockelelement 4 eingesetzt.

Gemäß Fig. 1 bildet für die Spin-On-Lufttrocknungskartusche 71 die Lufttrocknungskartuschen-Eingangskammer 19 den Eingang 91 für Druckluft in die Lufttrocknungskartusche 5. Entsprechend bildet gemäß Fig. 1 die Lufttrocknungskartuschen-Ausgangskammer 20 den Ausgang 92 für Druckluft aus der Lufttrocknungskartusche 5. Für diese Ausgestaltung sind somit sowohl der Eingang 91 als auch der Ausgang 92 im Sockelelement-Ankopplungsbereich 6 angeordnet. Hingegen ist für eine Einsatz-Lufttrocknungskartusche 72 gemäß Fig. 2 bis 6 der Eingang 91 der Lufttrocknungskartusche 5 von den Bohrungen 36 der Bodenplatte 33 gebildet. Der Ausgang 92 ist in diesem Fall im Austrittbereich das der Deckelplatte 32 und im Bereich der Lufttrocknungskartuschen-Ausgangskammer 20 angeordnet. Hier ist daher lediglich der Ausgang 92 im Bereich des Sockelelement-Ankopplungsbereichs 6 angeordnet, während der Eingang auf der gegenüberliegenden Stirnseite der Einsatz-Lufttrocknungskartusche 72 angeordnet ist.

Auf der dem Sockelelement-Ankopplungsbereich 6 gegenüberliegenden Seite der Lufttrocknungskartusche 5, welche in montiertem Zustand vorzugsweise unten angeordnet ist, besitzt die Lufttrocknungskartusche 5 den Entlastungsventil-Ankopplungsbereich 94, im Bereich dessen die Ankopplung des Entlastungsventils 40 an die Lufttrocknungskartusche 5 erfolgt, was bspw. durch Befestigung, Verrasten, Abstützen, Verschrauben oder sonstiges Verbinden, bspw. mit der Bodenplatte 33, dem Außengehäuse 29, dem Ringflansch 50, dem Gehäusedeckel 73 u. ä. erfolgen kann.

Der Übertragungskörper 41 bildet mit dem Fortsatz 45 und/oder der elektrischen Schnittstelle 87 den oberen Anschlussbereich 95, womit gleichzeitig auch ein Anschlussbereich der Lufttrocknungskartusche 5 gebildet ist, welcher Bestandteil des Sockelelement-Ankopplungsbereichs 6 ist.

Entsprechend bildet in dem unteren Endbereich der Übertragungskörper 41 den unteren Anschlussbereich 96, über welchen ein zumindest pneumatischer Anschluss des Entlastungsventils 40 erfolgt. Die dem Sockelelement 4 zugewandte Mündung der Steuerleitung 44 des Übertragungskörpers 41 bildet den Steuereingang 93 der Lufttrocknungskartusche 5.

Vorzugsweise ist mindestens ein in dem Sockelelement-Ankopplungsbereich 6 angeordnetes Dichtelement 12, 21, 23 zumindest teilweise aus Gummi hergestellt und/oder als O-Ring ausgebildet.

### BEZUGSZEICHENLISTE

- 1: Lufttrockner
- 2: Eingang
- 3: Ausgang
- 4: Sockelelement
- 5: Lufttrocknungskartusche
- 6: Sockelelement-Ankopplungsbereich
- 7: Grundkörper
- 8: Längs- oder Rotationsachse
- 9: Innengewinde
- 10: Fortsatz
- 11: Außengewinde
- 12: Dichtelement
- 13: Filterelement
- 14: Trocknungsmittel
- 15: Eingangsanschluss
- 16: Sockelelement-Eingangskammer
- 17: Ausgangsanschluss
- 18: Sockelelement-Ausgangskammer
- 19: Lufttrocknungskartuschen-Eingangskammer
- 20: Lufttrocknungskartuschen-Ausgangskammer
- 21: Dichtelement
- 22: Dichtelement
- 23: Dichtelement
- 24: Bohrung
- 25: Strömungskanal
- 26: Aufnahmekörper
- 27: Zwischenraum
- 28: Wandung
- 29: Außengehäuse
- 30: untere Kammer
- 31: Umlenkung
- 32: Deckenplatte
- 33: Bodenplatte
- 34: Innenraum
- 35: Druckfeder
- 36: Bohrung
- 37: Bohrung
- 38: Fortsatz
- 39: Deckenblech
- 40: Entlastungsventil
- 41: Übertragungskörper
- 42: Rohr
- 43: Innenbohrung
- 44: Steuerleitung
- 45: Fortsatz
- 46: Ausnehmung
- 47: Steueranschluss
- 48: Einsatzkörper
- 49: Dichtelement
- 50: Ringflansch
- 51: Führungshülse
- 52: Einsatzkörper
- 53: Ventilsitz
- 54: Durchgangsausnehmung
- 55: Druckkammer
- 56: Zylinderbereich
- 57: Verbindungsbereich
- 58: Dichtelement
- 59: Endbereich
- 60: Ventilkörper
- 61: Ventilkörperteil
- 62: Ventilkörperteil
- 63: Ventilteller
- 64: Ventilstößel
- 65: Ringkolben
- 66: Dichtelement
- 67: Dichtelement
- 68: Rastelement
- 69: Ventilfeder
- 70: Dichtelement
- 71: Spin-On-Kartusche
- 72: Einsatzkartusche
- 73: Gehäusedeckel
- 74: Bajonett-Verbindung
- 75: Zweigleitung
- 76: Magnetventil
- 77: Rückschlagventil
- 78: Magnetventil
- 79: Bypassleitung
- 80: Deckel
- 81: Spannelement
- 82: Entlüftungs-Schalldämpfer
- 83: Steuerleitung
- 84: Steuerleitung
- 85: Heizelement
- 86: elektrische Schnittstelle
- 87: elektrische Schnittstelle
- 88: Kanal
- 89: Rippe
- 90: Aktuator
- 91: Eingang
- 92: Ausgang
- 93: Steuereingang
- 94: Entlastungsventil-Ankopplungsbereich
- 95: Anschlussbereich
- 96: Anschlussbereich

## Patentansprüche

1. Lufttrocknungskartusche (5) für eine Druckluftanlage eines Nutzfahrzeugs mit
a) einem Sockelelement-Ankopplungsbereich (6),
aa) über welchen die Lufttrocknungskartusche (5) mit einem Sockelelement (4) eines Lufttrockners (1) koppelbar ist,
ab) der einen Steuereingang (93) für ein Steuersignal zur Steuerung eines Entlastungsventils (40), über welches eine gesteuerte Ableitung von Feuchtigkeit, Fluiden oder Verunreinigungen erfolgt, aufweist,
b) einem Entlastungsventil-Ankopplungsbereich (94), an welchen das Entlastungsventil (40) ankoppelbar ist oder angekoppelt ist,
c) wobei der Sockelelement-Ankopplungsbereich (6) und der Entlastungsventil-Ankopplungsbereich (94) auf gegenüberliegenden Seiten der Lufttrocknungskartusche (94) angeordnet sind.

2. Lufttrocknungskartusche (5) nach Anspruch 1, **dadurch gekennzeichnet, dass** sich eine Steuerleitung (44), über welche das Steuersignal zur Steuerung des Entlastungsventils (40) übertragen wird, von dem Sockelelement-Ankopplungsbereich (6) durch das Innere der Lufttrocknungskartusche (5) zu dem Entlastungsventil-Ankopplungsbereich (94) erstreckt.

3. Lufttrocknungskartusche (5) nach Anspruch 2, **dadurch gekennzeichnet, dass** sich die Steuerleitung (44) durch ein Trocknungsmittel (14) der Lufttrocknungskartusche (5) hindurch erstreckt.

4. Lufttrocknungskartusche (5) nach Anspruch 2 oder 3, **dadurch gekennzeichnet, dass** ein Übertragungskörper (41) vorhanden ist, der die Steuerleitung (44) ausbildet und sich durch das Innere der Lufttrocknungskartusche (5) und/oder durch das Trocknungsmittel (14) erstreckt.

5. Lufttrocknungskartusche (5) nach Anspruch 4, **dadurch gekennzeichnet, dass** der Übertragungskörper (41) einstückig mit
a) einem Aufnahmekörper (26) für das Trocknungsmittel (14),
b) einem Anschlussbereich (95) zum elektrischen und/oder pneumatisch dichten Verbinden der Steuerleitung (44) des Übertragungskörpers (41) mit einem Anschlussbereich des Sockelelements (4) und/oder
c) einem Anschlussbereich (96) zum elektrischen und/oder pneumatisch dichten Verbinden der Steuerleitung (44) des Übertragungskörpers (41) mit dem Entlastungsventils (40)
ausgebildet ist.

6. Lufttrocknungskartusche (5) nach einem der Ansprüche 2 bis 5, **dadurch gekennzeichnet, dass** sich die Steuerleitung (44) und/oder der Übertragungskörper (41) im Bereich oder koaxial zu einer Längs- oder Rotationsachse (8) der Lufttrocknungskartusche (5) erstreckt.

7. Lufttrocknungskartusche (5) nach einem der vorhergehenden Ansprüche, **dadurch gekennzeichnet, dass** die Steuerleitung (44) eine pneumatische Steuerleitung für einen pneumatischen Steuerdruck ist.

8. Lufttrocknungskartusche (5) nach einem der vorhergehenden Ansprüche, **dadurch gekennzeichnet, dass** die Steuerleitung (83; 84) eine elektrische Steuerleitung für ein elektrisches Steuersignal ist.

9. Lufttrocknungskartusche (5) nach einem der vorhergehenden Ansprüche, **dadurch gekennzeichnet, dass** sich eine Heizleitung, über welche ein Heizsignal zur Steuerung eines Heizelements (85) im Bereich des Entlastungsventils (40) übertragen wird, von dem Sockelelement-Ankopplungsbereich (6) durch das Innere der Lufttrocknungskartusche (5) zu dem Entlastungsventil-Ankopplungsbereich (6) erstreckt.

10. Lufttrocknungskartusche (5) nach einem der vorhergehenden Ansprüche, **dadurch gekennzeichnet, dass** die Lufttrocknungskartusche (5) als Spin-On-Kartusche (71) ausgebildet ist.

11. Lufttrocknungskartusche (5) nach einem der Ansprüche 1 bis 9, **dadurch gekennzeichnet, dass** die Lufttrocknungskartusche (5) als Einsatzkartusche (72) ausgebildet ist, welche in einem von einem Sockelelement (4) und einem Gehäusedeckel (73) eines Lufttrockners (1) begrenzten Innenraum angeordnet werden kann.

12. Lufttrockner (1) mit einem Sockelelement (4) und einer an dem Sockelelement (4) gehaltenen Lufttrocknungskartusche (5) nach einem der Ansprüche 1 bis 11.

13. Lufttrockner (1) nach einem der vorhergehenden Ansprüche, **dadurch gekennzeichnet, dass** eine elektrische oder pneumatisch dichte Verbindung zwischen dem Sockelelement (4) und dem Sockelelement-Ankopplungsbereich (6) der Lufttrocknungskartusche (5) automatisch mit der Montage der Lufttrocknungskartusche (5) mit dem Sockelelement (4) geschaffen wird.

14. Lufttrockner (1) nach einem der vorhergehenden Ansprüche, **dadurch gekennzeichnet, dass** ein Gehäusedeckel (73) vorhanden ist, welcher über ein Bajonett-Verbindung (74) mit dem Sockelelement (4) verbindbar oder verbunden ist.

15. Lufttrockner (1) nach einem der vorhergehenden Ansprüche, **dadurch gekennzeichnet, dass**
a) ein Magnetventil (76) zur Erzeugung eines Steuerdrucks für das Entlastungsventil (40),
b) ein Magnetventil (78) zur Steuerung einer Regeneration und/oder
c) ein Rückschlagventil (77) zur Absicherung eines Drucks stromabwärts des Ausgangs (92) der Lufttrocknungskartusche (5)
in das Sockelelement (4) integriert oder an dieses angesetzt sind/ist.

16. Lufttrockner (1) oder Lufttrocknungskartusche (5) nach einem der vorhergehenden Ansprüche, **dadurch gekennzeichnet, dass**
a) das Entlastungsventil (40) oder
b) ein Ventilsitz, ein Ventilkörper (60), ein Ventilkolben (65), eine Ventilfeder (69) und/oder ein Heizelement
lösbar mit einem oder dem Gehäusedeckel (73) und/oder der Lufttrocknungskartusche (5) verbunden sind/ist.

17. Lufttrockner (1) nach einem der vorhergehenden Ansprüche, **dadurch gekennzeichnet, dass** zwischen einer Wandung (28) der Lufttrocknungskartusche (5) und einem oder dem Gehäusedeckel (73) ein wendelförmiger Kanal (88) gebildet ist.

18. Nutzfahrzeug mit einer Lufttrocknungskartusche (5) oder einem Lufttrockner (1) nach einem der vorhergehenden Ansprüche, **dadurch gekennzeichnet, dass** die Lufttrocknungskartusche (5) von unten oder seitlich an das Sockelelement (4) montiert ist.
